# EUROPÄISCHE PATENTSCHRIFT

(11) **EP 3 453 606 B1**
(45) Veröffentlichungstag und Bekanntmachung des Hinweises auf die Patenterteilung: **15.07.2020**
(21) Anmeldenummer: 17189810.9
(22) Anmeldetag: 07.09.2017
(51) Int. Cl.: B63B 21/04, F16G 11/14

(54) **SEILANSCHLUSS UND VERFAHREN ZUM HERSTELLEN EINES SEILANSCHLUSSES**
ROPE CONNECTION AND METHOD FOR PRODUCING SAME
ATTACHE DE CÂBLE ET PROCÉDÉ DE FABRICATION D'UNE ATTACHE DE CÂBLE

(43) Veröffentlichungstag der Anmeldung: 13.03.2019
(73) Patentinhaber: SkySails Power GmbH, 20537 Hamburg (DE)
(72) Erfinder: Felix, Braun, 24111 Kiel (DE); Johannes Böhm, 41564 Kaarst (DE); Godehard, Gauf, 22926 Ahrensburg (DE); Tobias, Klocke, 22926 Artensburg (DE); Christoph, Heeckt, 21220 Seevetal (DE); Xaver, Paulig, 22769 Hamburg (DE); Bernd, Specht, 21271 Hanstedt-Weihe (DE)
(74) Vertreter: Glawe, Delfs, Moll

(56) Entgegenhaltungen:
- EP-A1- 2 850 340
- GB-A- 2 003 527
- US-A- 1 240 966
- US-A- 3 867 046
- US-A- 6 120 074
- US-A1- 2011 278 871

## Beschreibung

Die Erfindung betrifft einen Seilanschluss mit einem in ein Seilauge eingesetzten Verstärkungsteil. Die Erfindung betrifft außerdem eine Schutzvorrichtung für ein Seilauge und ein Verfahren zum Herstellen eines Seilanschlusses.

Ein Seilanschluss kann genutzt werden, um eine mechanische Verbindung zwischen dem Seil und einer anderen Struktur herzustellen. Dazu kann ein Anschlagelement, wie beispielsweise ein Schäkel, durch ein Seilauge des Seilanschlusses hindurch geführt werden und an der Struktur angeschlagen werden, siehe z.B. Dokument US 2011/278871 A.

Liegt das Seilauge direkt an einem Bolzen des Anschlagelements an, so ist die Kraftübertragung auf einen kleinen Bereich beschränkt. Unter Einwirkung einer Zugkraft wird der betreffende Abschnitt des Seilauges mit einem kleinen Radius umgelenkt. Bei einer Relativbewegung zwischen dem Seilauge und dem Bolzen wirkt lokal begrenzt eine hohe Reibung auf das Seilauge. Beides stellt eine Belastung für das Seil dar, wodurch die Lebensdauer des Seils beeinträchtigt werden kann.

Um die auf das Seil wirkende Belastung zu vermindern, kann in das Seilauge ein Verstärkungsteil eingesetzt werden. Die Kräfte werden dann nicht direkt zwischen dem Anschlagteil und dem Seilauge übertragen, sondern indirekt über das Verstärkungsteil. Das Verstärkungsteil kann so ausgelegt sein, dass die Kraftübertragung sich über einen größeren Abschnitt des Seilauges verteilt.

Durch das Verstärkungsteil wird der Querschnitt des Seilauges vergrößert. Um das Seilauge durch enge Öffnungen hindurchführen zu können, wie sie beispielsweise in Ösen, Umlenkblöcken und ähnlichen Führungseinrichtungen üblich sind, muss das Verstärkungsteil von dem Seilauge gelöst werden. Dies kann beispielsweise dadurch geschehen, dass das Seilauge vor dem Einführen in die enge Öffnung geöffnet und anschließend wieder geschlossen wird. Das Herauslösen des Verstärkungsteils aus dem Seilauge ohne vorheriges Öffnen des Seilauges ist regelmäßig nur unter Verwendung von Spezialwerkzeug möglich.

Der Erfindung liegt die Aufgabe zugrunde, ein Seilauge sowie ein zugehöriges Verfahren und eine zugehörige Schutzvorrichtung vorzustellen, die eine höhere Bedienungsfreundlichkeit aufweisen. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Der erfindungsgemäße Seilanschluss umfasst ein Seilauge, ein in das Seilauge eingesetztes Verstärkungsteil und ein Halteelement. Das Halteelement erstreckt sich entlang einem Umfangsabschnitt des Verstärkungsteils. Das Halteelement ist lösbar mit dem Verstärkungsteil verbunden, so dass ein Seilaugenabschnitt zwischen dem Halteelement und dem Verstärkungsteil eingeschlossen ist.

Im zusammengesetzten Zustand des Seilanschlusses bilden das Verstärkungsteil und das Halteelement eine mit dem Seilauge verbundene Einheit, durch die das Seilauge vor übermäßigen Belastungen geschützt ist. Durch das Verstärkungsteil kann ein für das Seil vorteilhafter Biegeradius vorgegeben werden. Indem das Seilauge über einen längeren Abschnitt an dem fest im Verstärkungsteil sitzenden Seilauge anliegen kann, wird eine Belastung durch lokale Reibung vermieden.

Soll das Seilauge durch eine Öffnung hindurchgeführt werden, so kann das Halteelement von dem Verstärkungsteil gelöst werden. Das Seilauge, das nun nicht mehr zwischen dem Verstärkungsteil und dem Halteelement eingeschlossen ist, kann von dem Verstärkungsteil gelöst werden. Die sich aus dem Verstärkungsteil ergebende Begrenzung des Biegeradius des Seils ist dann aufgehoben. Das Seilauge kann zusammengedrückt werden und durch die enge Öffnung hindurch geführt werden.

Wenn das Halteelement lösbar mit dem Verstärkungsteil verbunden ist, so ist ein Lösen der beiden Elemente voneinander möglich, ohne dass das Halteelement oder Verstärkungsteil beschädigt werden. Das Halteelement kann also mehrfach mit dem Verstärkungsteil verbunden und von dem Verstärkungsteil gelöst werden. Das Lösen kann eine elastische Verformung des Halteelements umfassen. Die Verformungskraft kann so bemessen sein, dass sie manuell oder unter Verwendung eines einfachen Hebels aufgebracht werden kann. Der erfindungsgemäße Seilanschluss kann insbesondere so ausgelegt sein, dass das Halteelement werkzeuglos von dem Verstärkungsteil lösbar ist.

Bezogen auf einen Mittelpunkt des Verstärkungsteils kann das Halteelement sich über einen Umfangswinkel von mindestens 60°, vorzugsweise mindestens 120 °, weiter vorzugsweise mindestens 180° erstrecken. Wenn das Halteelement sich über einen großen Umfangswinkel erstreckt, kann eine sichere Führung des zwischen dem Halteelement und dem Verstärkungsteil eingeschlossenen Seilaugenabschnitts gewährleistet werden.

Das Verstärkungsteil sollte so bemessen sein, dass es leicht in das Seilauge eingeführt werden bzw. von dem Seilauge gelöst werden kann, wenn das Halteelement nicht mit dem Verstärkungsteil verbunden ist. Insbesondere sollte der Umfang des Verstärkungsteils kleiner sein als die Länge des Seilabschnitts, der das Seilauge bildet. Im eingesetzten Zustand kann das Seilauge sich entlang dem Umfang des Verstärkungsteils erstrecken. Der Umfang des Verstärkungsteils kann einen kreisförmigen Abschnitt umfassen und insbesondere einen Vollkreis bilden.

Das Verstärkungsteil kann eine Bohrung aufweisen, die sich vorzugsweise senkrecht zu einer durch den Umfang des Verstärkungsteils aufgespannten Ebene erstreckt. Die zu dieser Ebene senkrechte Richtung wird als Axialrichtung des Verstärkungsteils bezeichnet. Durch die Bohrung kann ein Bolzenteil eines Anschlagelements hindurchgeführt werden, mit dem das Seilauge an einer benachbarten Struktur befestigt wird. Ein Bolzenteil in diesem Sinne ist jedes Teil eines Anschlagelements, das sich durch die Bohrung hindurch erstreckt.

Die Bohrung kann mittig in dem Verstärkungsteil angeordnet sein, was bei einem kreisförmigen Verstärkungsteil den Vorteil hat, dass das Verstärkungsteil mit einer beliebigen Winkelausrichtung in das Verstärkungsteil eingesetzt werden kann. In einer Ausführungsform der Erfindung ist die Bohrung exzentrisch in dem Verstärkungsteil angeordnet. Das Verstärkungsteil kann dann so in das Seilauge eingesetzt werden, dass die Bohrung so nahe wie möglich an dem Ende des Seilauges angeordnet ist, an dem von außen Zug auf das Seil ausgeübt wird. Auf diese Weise kann verhindert werden, dass das Verstärkungsteil im Betrieb an dem Seil reibt.

In seiner Axialrichtung kann das Verstärkungsteil eine Erstreckung haben, die größer ist als der Durchmesser des Seils, vorzugsweise wenigstens um den Faktor 1,5 größer, weiter vorzugsweise wenigstens um den Faktor 2 größer ist als der Durchmesser des Seils. Um die Einheit aus dem Seilauge und dem Verstärkungsteil kompakt zu halten, ist die größte Erstreckung des Verstärkungsteils in Axialrichtung vorzugsweise um nicht mehr als den Faktor 5 größer als der Durchmesser des Seils. Die axiale Erstreckung des Verstärkungsteils sollte insbesondere so gewählt sein, dass sie zum Gegenstück passt, also z.B. zur lichten Weite des verwendeten Schäkels. Das Seil hat normalerweise einen über seine Länge konstanten Durchmesser. Ist dies nicht der Fall, so wird die Bezugsgröße durch den Seildurchmesser im Bereich des Seilauges gebildet.

In der Umfangsfläche des Verstärkungsteils kann eine Führungsrinne für einen Seilaugenabschnitt vorgesehen sein. Die Breite der Führungsrinne kann an den Seildurchmesser angepasst sein, so dass das Seil in Axialrichtung des Verstärkungsteils einer definierten Führung unterliegt. Bezogen auf die Radialrichtung des Verstärkungsteils kann der Durchmesser der Führungsrinne so bemessen sein, dass der Seilaugenabschnitt teilweise oder vollständig in der Führungsrinne aufgenommen werden kann. Die Tiefe der Führungsrinne kann mindestens so groß sein wie der Radius, insbesondere mindestens so groß sein wie der Durchmesser des Seils im Bereich des Seilaugenabschnitts. Ist die Tiefe der Führungsrinne kleiner als der Durchmesser des Seils, so kann das Halteelement eine an das Seil angepasste Aussparung haben. Die Aussparung kann im zusammengesetzten Zustand des Seilanschlusses an einem Umfangsabschnitt des Seils anliegen.

Radial außerhalb der Führungsrinne kann in dem Verstärkungsteil eine Aufnahmerinne für das Halteelement ausgebildet sein. Bezogen auf die axiale Richtung des Verstärkungsteils kann die Aufnahmerinne eine größere Breite haben als die Führungsrinne. Dadurch ergibt sich seitlich benachbart zu der Führungsrinne eine Auflagefläche, auf der das Halteelement aufliegen kann. Die Auflagefläche kann in radialer Richtung weiter außen angeordnet sein als die Außenfläche des in der Führungsrinne angeordneten Seilabschnitts.

An die Auflagefläche der Aufnahmerinne kann eine seitliche Begrenzung der Aufnahmerinne anschließen. Die seitliche Begrenzung kann sich in radialer Richtung bis zu der Umfangsfläche des Verstärkungsteils erstrecken. Die Außenfläche des Halteelements kann so gestaltet sein, dass sie bündig mit der Umfangsfläche des Verstärkungsteils abschließt. Die seitliche Begrenzung kann eine Führung für das Halteelement in axialer Richtung bieten.

Die Führungsrinne und/oder die Aufnahmerinne können sich über den gesamten Umfang des Verstärkungsteils erstrecken. Möglich ist auch, dass die Führungsrinne und/oder die Aufnahmerinne sich nur über einen Umfangsabschnitt des Verstärkungsteils erstrecken. Auf diese Weise kann eine bestimmte Winkelausrichtung des Verstärkungsteils relativ zu dem Seilaugenabschnitt vorgegeben werden, so dass im Betrieb die Reibung zwischen dem Verstärkungsteil und dem Seilauge vermindert wird. Insbesondere kann die Aufnahmerinne so bemessen sein, dass sie an die Länge des Halteelements angepasst ist.

Wenn das Halteelement sich über einen Umfangswinkel von mehr als 180° erstreckt, kann es einen Formschluss mit dem Umfang des Verstärkungsteils eingehen. Das Halteelement kann so gestaltet sein, dass es elastisch über den Durchmesser des Verstärkungsteils hinweg geführt werden kann und hinter dem Durchmesser einrastet. Im eingesetzten Zustand können eines oder beide Enden des Halteelements an dem Seilauge anliegen und auf diese Weise einer Verschiebung des Seilauges relativ zu dem Verstärkungsteil entgegenwirken. Ein erhöhter Anlagedruck zwischen dem Seilauge und den Enden des Halteelements kann sich daraus ergeben, dass der betreffende Abschnitt des Seilauges aus der Führungsrinne abgehoben ist.

Die auf das Seil wirkenden Zugkräfte werden über das Verstärkungsteil übertragen. Das Verstärkungsteil sollte also hinreichend stabil ausgebildet sein, um den Kräften standhalten zu können. Beispielsweise kann das Verstärkungsteil aus Edelstahl gefertigt sein. Möglich ist auch, dass das Verstärkungsteil Aluminium, Kunststoff, Holz oder einem ähnlichen Material besteht.

Im Unterschied dazu ist das Halteelement keinen großen Kräften ausgesetzt. Das Halteelement dient lediglich dazu, dass Verstärkungsteil relativ zu dem Seilauge in Position zu halten. Zu diesem Zweck kann ein weniger stabiles Material als bei dem Verstärkungsteil ausreichen. Beispielsweise kann das Halteelement aus einem elastischen Kunststoffmaterial gefertigt sein.

Die Erfindung betrifft außerdem eine Schutzvorrichtung für ein Seilauge, umfassend ein Verstärkungsteil und ein Halteelement. Das Verstärkungsteil umfasst eine Führungsrinne für ein Seilauge, die sich über einen Umfangsabschnitt des Verstärkungsteils erstreckt. Radial außerhalb der Führungsrinne ist eine Aufnahmerinne für das Halteelement angeordnet. Die Schutzvorrichtung kann mit weiteren Merkmalen fortgebildet werden, die im Zusammenhang des erfindungsgemäßen Seilauges beschrieben sind.

Die Erfindung betrifft außerdem ein System aus einem solchen Seilauge und einem Anschlagelement, wobei das Anschlagelement dazu ausgelegt ist, das Seilauge mit einer benachbarten Struktur zu verbinden. Das Anschlagelement kann so ausgelegt sein, dass Zugkräfte nicht direkt zwischen dem Anschlagelement und dem Seilauge übertragen werden, sondern indirekt über das Verstärkungsteil. Das Anschlagelement kann ein Bolzenteil umfassen, das dazu ausgelegt ist, durch eine Bohrung in dem Verstärkungsteil hindurchgeführt zu werden. Ein Beispiel für ein solches Anschlagelement ist ein Schäkel, der an einer benachbarten Struktur angeschlagen werden kann und dessen Bolzen durch eine Bohrung des Verstärkungsteils hindurchgeführt wird.

Die Erfindung betrifft außerdem ein Verfahren zum Herstellen eines Seilanschlusses. Bei dem Verfahren wird ein Verstärkungsteil in ein Seilauge eingesetzt. Ein Halteelement wird lösbar mit dem Verstärkungsteil verbunden, so dass das Halteelement sich entlang einem Umfangsabschnitt des Verstärkungsteils erstreckt und dass ein Seilaugenabschnitt zwischen dem Halteelement und dem Verstärkungsteil eingeschlossen ist. Lösbar im Sinne der Erfindung bedeutet, dass das Halteelement ohne Verwendung eines Werkzeugs von dem Verstärkungsteil gelöst werden kann.

Das Verfahren kann mit weiteren Merkmalen fortgebildet werden, die im Zusammenhang des erfindungsgemäßen Seilanschlusses oder der erfindungsgemäßen Schutzvorrichtung beschrieben sind. Der Seilanschluss und die Schutzvorrichtung können mit Merkmalen fortgebildet werden, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine perspektivische Ansicht eines erfindungsgemäßen Seilanschlusses;
- Fig. 2:: eine Schnittansicht eines erfindungsgemäßen Seilauges;
- Fig. 3:: einen Schnitt entlang Linie A-A in Fig. 2;
- Fig. 4:: eine perspektivische Ansicht eines erfindungsgemäßen Verstärkungsteils;
- Fig. 5:: eine perspektivische Ansicht eines erfindungsgemäßen Halteelements.

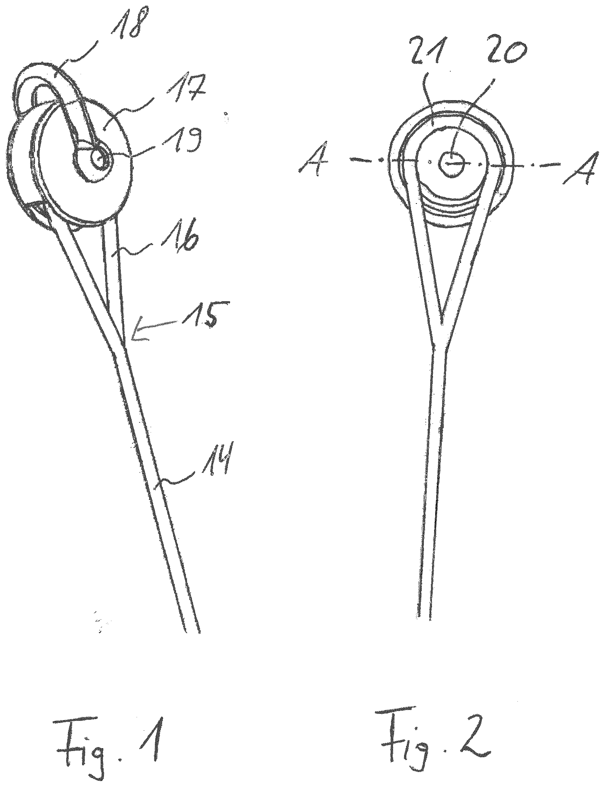

Ein Seil 14 ist an einem Ende mit einem Spleiß 15 versehen, so dass ein Seilauge 16 gebildet wird. In das Seilauge 16 eingesetzt ist ein Verstärkungsteil 17, an dem ein Schäkel 18 angeschlagen ist. Der Schäkel 18 umfasst einen Bolzen 19, der durch eine Bohrung 20 des Verstärkungsteils 17 hindurchgeführt ist. Über den Schäkel 18 kann das Seil 14 an eine benachbarte Struktur angeschlagen werden, die in Fig. 1 nicht dargestellt ist.

Das Verstärkungsteil 17 hat einen Umfang, der kleiner ist als die Länge des Seilabschnitts, der das Seilauge 16 bildet. Das Verstärkungsteil 17 kann deswegen aus dem Seilauge 16 entfernt werden. Ist das Verstärkungsteil 17 aus dem Seilauge 16 entfernt, so kann das Seil in dem Seilauge 16 mit engem Radius umgelegt werden, so dass sich insgesamt ein kompakter Zustand des Seilauges 16 ergibt. In diesem Zustand kann das Seilauge 16 durch enge Öffnungen hindurchgeführt werden, wie sie beispielsweise in Ösen, Umlenkblöcken und ähnlichen Führungen ausgebildet sind.

Nach dem Hindurchführen des Seilauges 16 durch die enge Öffnung kann das Verstärkungsteil 17 wieder in das Seilauge 16 eingesetzt werden, um das Seilauge 16 an eine Struktur anzuschlagen. Durch das Verstärkungsteil 17 wird ein Mindestradius vorgegeben, mit dem das Seil 14 innerhalb des Seilauges 16 umgelenkt wird. Dieser Mindestradius ist so bemessen, dass das Seil 14 in dem Bereich des Seilauges 16 auch bei Einwirken starker Zugkräfte keiner übermäßigen Belastung ausgesetzt wird und dass die volle Designlast des Seils bzw. des Spleißes genutzt werden kann. Die gesamte Kraftübertragung zwischen dem Seil 14 und dem Schäkel 18 erfolgt über das Verstärkungsteil 17, so dass die Belastung sich im Wesentlichen gleichmäßig über den Seilaugenabschnitt 21 verteilt, der an dem Verstärkungsteil 17 anliegt.

Das Verstärkungsteil 17 besteht aus Edelstahl und hat einen kreisförmigen Umfang, in dessen Mitte die Bohrung 20 ausgebildet ist, die sich in axialer Richtung des Verstärkungsteils 17 erstreckt. In der Umfangsfläche des Verstärkungsteils 17 ist eine mehrstufige Vertiefung ausgebildet, die eine Führungsrinne 22 für den Seilaugenabschnitt 21 und eine Aufnahmerinne 23 für ein Halteelement 24 umfasst.

Die Führungsrinne 22 ist im Querschnitt an den Durchmesser des Seils 14 angepasst, so dass der Seilaugenabschnitt 21 in der Führungsrinne 22 einer definierten Führung unterliegt. Der Seilaugenabschnitt 21 liegt über einen auf das Verstärkungsteil 17 bezogenen Umfangswinkel von etwas mehr als 180° in der Führungsrinne 22 an.

Die radial außerhalb der Führungsrinne 22 angeordnete Aufnahmerinne 23 nimmt das Halteelement 24 auf, das dazu dient, den Seilaugenabschnitt 21 in der Führungsrinne 22 zu halten. Das in die Aufnahmerinne 23 eingesetzte Halteelement liegt mit seiner Innenfläche und seinen beiden Seitenflächen an dem Verstärkungsteil 17 an. Das Halteelement erstreckt sich über einen auf das Verstärkungsteil 17 bezogenen Umfangswinkel von etwas mehr als 180°, so dass die beiden Enden 25, 26 des Halteelements 24 hinter dem größten Durchmesser des Verstärkungsteils 17 einrasten und das Halteelement 24 dadurch in seiner Position halten. Die beiden Enden 25, 26 können auf dem Seilauge 16 aufliegen und dadurch eine Bewegung des Seilauges 16 relativ zu dem Verstärkungsteil 17 behindern.

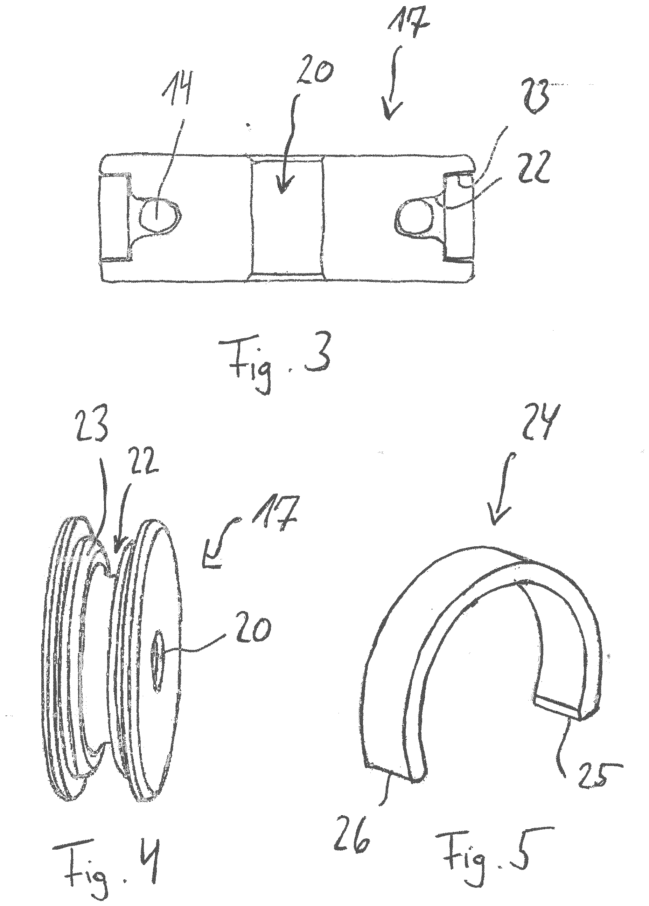

Um das Verstärkungsteil 17 ausgehend von dem montierten Zustand, der in den Fig. 1 und 3 dargestellt ist, von dem Seilauge 16 zu trennen, wird zunächst das Halteelement 24 aus der Aufnahmerinne 23 des Verstärkungsteils 17 herausgelöst. Dazu wird das Halteelement 24, das aus einem elastischen Kunststoffmaterial besteht, in radialer Richtung gespreizt, so dass die beiden Enden 25, 26 des Halteelements 24 über den größten Durchmesser des Verstärkungsteils 17 hinweg geführt werden können.

Nach dem Lösen des Halteelements 24 kann das Seilauge 16 über den Umfang des Verstärkungsteils 17 hinweg gestreift werden, wodurch das Verstärkungsteil 17 von dem Seilauge 16 getrennt wird. Um ein Durchführen durch eine kleine Öffnung zu ermöglichen, kann das Seilauge 16 jetzt eng zusammengedrückt werden.

Anschließend wird die Schutzvorrichtung für das Seilauge 16 in umgekehrter Richtung montiert. Es wird also das Seilauge 16 über den Umfang des Verstärkungsteils 17 gestreift, so dass der Seilaugenabschnitt 21 in der Führungsrinne 22 zu liegen kommt. Anschließend wird das Halteelement 24 in die Aufnahmerinne 23 eingesetzt, so dass der Seilaugenabschnitt 21 in seiner Position in der Führungsrinne 22 gehalten wird.

## Patentansprüche

1. Seilanschluss mit einem Seilauge (16), mit einem in das Seilauge (16) eingesetzten Verstärkungsteil (17) und mit einem Halteelement (24), wobei das Halteelement (24) sich entlang einem Umfangsabschnitt des Verstärkungsteils (17) erstreckt und lösbar mit dem Verstärkungsteil (17) verbunden ist, so dass ein Seilaugenabschnitt (21) zwischen dem Halteelement (24) und dem Verstärkungsteil (17) eingeschlossen ist, wobei an einer Umfangsfläche des Verstärkungsteils (17) eine Führungsrinne (22) für einen Seilaugenabschnitt (21) ausgebildet ist, **dadurch gekennzeichnet, dass** das Verstärkungsteil (17) eine radial außerhalb der Führungsrinne (22) angeordnete Aufnahmerinne (23) für das Halteelement (24) aufweist.

2. Seilanschluss nach Anspruch 1, **dadurch gekennzeichnet, dass** das Halteelement (24) sich über einen Umfangswinkel des Verstärkungsteils (17) von mindestens 60°, vorzugsweise mindestens 120 °, weiter vorzugsweise mindestens 180° erstreckt.

3. Seilanschluss nach Anspruch 1 oder 2, **dadurch gekennzeichnet, dass** der Umfang des Verstärkungsteils (17) kleiner ist als die Länge des Seilabschnitts, der das Seilauge (16) bildet.

4. Seilanschluss nach einem der Ansprüche 1 bis 3, **dadurch gekennzeichnet, dass** das Verstärkungsteil (17) eine Bohrung (20) aufweist, die sich senkrecht zu einer durch den Umfang des Verstärkungsteils (17) aufgespannten Ebene erstreckt.

5. Seilanschluss nach Anspruch 4, **dadurch gekennzeichnet, dass** die Bohrung (20) exzentrisch in dem Verstärkungsteil (17) angeordnet ist.

6. Seilanschluss nach einem der Ansprüche 1 bis 5, **dadurch gekennzeichnet, dass** das Verstärkungsteil (17) in Axialrichtung eine Erstreckung hat, die größer ist, vorzugsweise wenigstens um den Faktor 1,5, weiter vorzugsweise wenigstens um den Faktor 2 größer ist als der Durchmesser des Seils (14).

7. Seilanschluss nach einem der Ansprüche 1 bis 6, **dadurch gekennzeichnet, dass** Tiefe der Führungsrinne (22) mindestens so groß ist wie der Radius, vorzugsweise mindestens so groß ist wie der Durchmesser des Seils im Bereich des Seilaugenabschnitts (21).

8. Seilanschluss nach einem der Ansprüche 1 bis 7, **dadurch gekennzeichnet, dass** die Aufnahmerinne (23) eine größere Breite hat als die Führungsrinne (22).

9. Seilanschluss nach einem der Ansprüche 1 bis 8, **dadurch gekennzeichnet, dass** das Halteelement (24) im eingesetzten Zustand bündig mit dem Umfang des Verstärkungsteils (17) abschließt.

10. Seilanschluss nach einem der Ansprüche 1 bis 9, **dadurch gekennzeichnet, dass** das Halteelement (24) im eingesetzten Zustand in einem Formschluss mit einem Umfang des Verstärkungsteils (17) steht.

11. Seilanschluss nach einem der Ansprüche 1 bis 10, **dadurch gekennzeichnet, dass** im eingesetzten Zustand die beiden Enden (25, 26) des Halteelements (24) an dem Seilauge (16) anliegen.

12. Schutzvorrichtung für ein Seilauge, umfassend ein Verstärkungsteil (17) und ein Halteelement (24), wobei das Verstärkungsteil (17) eine Führungsrinne (22) für ein Seilauge (16) umfasst, die sich über einen Umfangsabschnitt des Verstärkungsteils (17) erstreckt, und wobei radial außerhalb des Seilauges (16) eine Aufnahmerinne (23) für das Halteelement (24) angeordnet ist.

13. Verfahren zum Herstellen eines Seilanschlusses, bei dem ein Verstärkungsteil (17) in ein Seilauge (16) eingesetzt wird, wobei an einer Umfangsfläche des Verstärkungsteils (17) eine Führungsrinne (22) für einen Seilaugenabschnitt (21) ausgebildet ist und bei dem ein Halteelement (24) lösbar mit dem Verstärkungsteil (17) verbunden wird, wobei das Verstärkungsteil (17) eine radial außerhalb der Führungsrinne (22) angeordnete Aufnahmerinne (23) für das Halteelement (24) aufweist, sodass das Halteelement (24) sich entlang einem Umfangsabschnitt des Verstärkungsteils (17) erstreckt und so dass der Seilaugenabschnitt (21) zwischen dem Halteelement (24) und dem Verstärkungsteil (17) eingeschlossen ist.

## Claims

1. Rope connection with a rope eye (16), with a reinforcing part (17) inserted into the rope eye (16) and with a holding element (24), wherein the holding element (24) extends along a circumferential portion of the reinforcing part (17) and is releasably connected to the reinforcing part (17), with the result that a rope eye portion (21) is enclosed between the holding element (24) and the reinforcing part (17), wherein a guiding channel (22) for a rope eye portion (21) is formed on a circumferential surface of the reinforcing part (17), **characterized in that** the reinforcing part (17) has a receiving channel (23), arranged radially outside the guiding channel (22), for the holding element (24).

2. Rope connection according to Claim 1, **characterized in that** the holding element (24) extends over a circumferential angle of the reinforcing part (17) of at least 60°, preferably at least 120°, further preferably at least 180°.

3. Rope connection according to Claim 1 or 2, **characterized in that** the circumference of the reinforcing part (17) is less than that length of the rope portion which forms the rope eye (16).

4. Rope connection according to one of Claims 1 to 3, **characterized in that** the reinforcing part (17) has a bore (20), which extends perpendicular to a plane spanned by the circumference of the reinforcing part (17) .

5. Rope connection according to Claim 4, **characterized in that** the bore (20) is arranged eccentrically in the reinforcing part (17).

6. Rope connection according to one of Claims 1 to 5, **characterized in that** the reinforcing part (17) has in the axial direction an extent which is greater than the diameter of the rope (14), preferably at least by a factor of 1.5, further preferably at least by a factor of 2.

7. Rope connection according to one of Claims 1 to 6, **characterized in that** the depth of the guiding channel (22) is at least as great as the radius, preferably at least as great as the diameter, of the rope in the region of the rope eye portion (21).

8. Rope connection according to one of Claims 1 to 7, **characterized in that** the receiving channel (23) has a greater width than the guiding channel (22).

9. Rope connection according to one of Claims 1 to 8, **characterized in that**, in the inserted state, the holding element (24) finishes flush with the circumference of the reinforcing part (17).

10. Rope connection according to one of Claims 1 to 9, **characterized in that**, in the inserted state, the holding element (24) comprises a form fit with a circumference of the reinforcing part (17).

11. Rope connection according to one of Claims 1 to 10, **characterized in that**, in the inserted state, the two ends (25, 26) of the holding element (24) bear against the rope eye (16).

12. Protective device for a rope eye, comprising a reinforcing part (17) and a holding element (24), wherein the reinforcing part (17) comprises a guiding channel (22) for a rope eye (16) that extends over a circumferential portion of the reinforcing part (17), and wherein a receiving channel (23) for the holding element (24) is arranged radially outside the rope eye (16).

13. Method for producing a rope connection, in which a reinforcing part (17) is inserted into a rope eye (16), wherein a guiding channel (22) for a rope eye portion (21) is formed on a circumferential surface of the reinforcing part (17), and in which a holding element (24) is releasably connected to the reinforcing part (17), wherein the reinforcing part (17) has a receiving channel (23), arranged radially outside the guiding channel (22), for the holding element (24), with the result that the holding element (24) extends along a circumferential portion of the reinforcing part (17) and with the result that the rope eye portion (21) is enclosed between the holding element (24) and the reinforcing part (17).

## Revendications

1. Attache de câble comprenant un œillet de câble (16), comprenant une partie de renforcement (17) insérée dans l'œillet de câble (16) et comprenant un élément de support (24), l'élément de support (24) s'étendant le long d'une section de périphérie de la partie de renforcement (17) et étant raccordé de manière amovible avec la partie de renforcement (17), de telle sorte qu'une section d'œillet de câble (21) soit enfermée entre l'élément de support (24) et la partie de renforcement (17), une rigole de guidage (22) pour une section d'œillet de câble (21) étant formée sur une surface de périphérie de la partie de renforcement (17), **caractérisée en ce que** la partie de renforcement (17) comprend une rigole de réception (23), agencée radialement à l'extérieur de la rigole de guidage (22), pour l'élément de support (24).

2. Attache de câble selon la revendication 1, **caractérisée en ce que** l'élément de support (24) s'étend sur un angle de périphérie de la partie de renforcement (17) d'au moins 60°, de préférence d'au moins 120°, de manière davantage préférée d'au moins 180°.

3. Attache de câble selon la revendication 1 ou 2, **caractérisée en ce que** la périphérie de la partie de renforcement (17) est inférieure à la longueur de la section de câble qui forme l'œillet de câble (16).

4. Attache de câble selon l'une quelconque des revendications 1 à 3, **caractérisée en ce que** la partie de renforcement (17) comprend un alésage (20), qui s'étend perpendiculairement à un plan formé par la périphérie de la partie de renforcement (17).

5. Attache de câble selon la revendication 4, **caractérisée en ce que** l'alésage (20) est agencé excentriquement dans la partie de renforcement (17).

6. Attache de câble selon l'une quelconque des revendications 1 à 5, **caractérisée en ce que** la partie de renforcement (17) a une extension dans la direction axiale qui est supérieure, de préférence au moins d'un facteur de 1,5, de manière davantage préférée au moins d'un facteur de 2, au diamètre du câble (14).

7. Attache de câble selon l'une quelconque des revendications 1 à 6, **caractérisée en ce qu'**une profondeur de la rigole de guidage (22) est au moins aussi grande que le rayon, de préférence au moins aussi grande que le diamètre, du câble dans la zone de la section d'œillet de câble (21).

8. Attache de câble selon l'une quelconque des revendications 1 à 7, **caractérisée en ce que** la rigole de réception (23) a une largeur plus grande que la rigole de guidage (22).

9. Attache de câble selon l'une quelconque des revendications 1 à 8, **caractérisée en ce que** l'élément de support (24) se termine en affleurement avec la périphérie de la partie de renforcement (17) à l'état inséré.

10. Attache de câble selon l'une quelconque des revendications 1 à 9, **caractérisée en ce que** l'élément de support (24) est en accouplement de forme avec une périphérie de la partie de renforcement (17) à l'état inséré.

11. Attache de câble selon l'une quelconque des revendications 1 à 10, **caractérisée en ce que** les deux extrémités (25, 26) de l'élément de support (24) reposent sur l'œillet de câble (16) à l'état inséré.

12. Dispositif de protection pour un œillet de câble, comprenant une partie de renforcement (17) et un élément de support (24), la partie de renforcement (17) comprenant une rigole de guidage (22) pour un œillet de câble (16), qui s'étend sur une section de périphérie de la partie de renforcement (17), et une rigole de réception (23) pour l'élément de support (24) étant agencée radialement à l'extérieur de l'œillet de câble (16) .

13. Procédé de fabrication d'une attache de câble, selon lequel une partie de renforcement (17) est insérée dans un œillet de câble (16), une rigole de guidage (22) pour une section d'œillet de câble (21) étant formée sur une surface de périphérie de la partie de renforcement (17), et selon lequel un élément de support (24) est raccordé de manière amovible avec la partie de renforcement (17), la partie de renforcement (17) comprenant une rigole de réception (23) pour l'élément de support (24), agencée radialement à l'extérieur de la rigole de guidage (22), de telle sorte que l'élément de support (24) s'étende le long d'une section de périphérie de la partie de renforcement (17) et de telle sorte que la section d'œillet de câble (21) soit enfermée entre l'élément de support (24) et la partie de renforcement (17).
